(19) **Europäisches Patentamt**
**European Patent Office**
**Office européen des brevets**

(11) **EP 1 583 427 B1**

(12) **EUROPEAN PATENT SPECIFICATION**

(45) Date of publication and mention
of the grant of the patent:
**25.04.2007 Bulletin 2007/17**

(21) Application number: **04702651.3**

(22) Date of filing: **16.01.2004**

(51) Int Cl.:
*A22C 25/18* (2006.01)      *B26D 7/30* (2006.01)
*B26D 7/32* (2006.01)

(86) International application number:
**PCT/DK2004/000020**

(87) International publication number:
**WO 2004/064529 (05.08.2004 Gazette 2004/32)**

(54) **A METHOD OF PROCESSING FILLETS, SUCH AS SALMON FILLETS, AND A SYSTEM FOR PERFORMING THE METHOD**

VERFAHREN ZUR VERARBEITUNG VON FILETS, WIE LACHSFILETS, UND SYSTEM ZUR DURCHFÜHRUNG DES VERFAHRENS

PROCEDE POUR TRAITER DES FILETS, TELS QUE DES FILETS DE SAUMON, ET SYSTEME PERMETTANT DE REALISER LEDIT PROCEDE

(84) Designated Contracting States:
**AT BE BG CH CY CZ DE DK EE ES FI FR GB GR HU IE IT LI LU MC NL PT RO SE SI SK TR**

(30) Priority: **17.01.2003 DK 200300041**

(43) Date of publication of application:
**12.10.2005 Bulletin 2005/41**

(73) Proprietor: **Rasmussen, Moller, Hans**
**8585 Glesborg (DK)**

(72) Inventor: **Rasmussen, Moller, Hans**
**8585 Glesborg (DK)**

(74) Representative: **Tellefsen, Jens J. et al**
**Patrade A/S,**
**Fredens Torv 3A**
**8000 Aarhus C (DK)**

(56) References cited:
**WO-A-02/07937          DE-A- 3 703 807**
**US-A- 4 557 019**

## Description

The invention relates to a method of processing and packaging fillets, such as salmon fillets, wherein the fillets are fed on to a conveyor belt which is provided with a slicer for cutting the fillets into fillet slices, and wherein at least a camera and a calculation unit are arranged near the conveyor belt for imaging and calculating characteristic parameters of the fillet slices.

The invention moreover relates to a system for processing fillets, such as salmon fillets, which are fed on to a conveyor belt equipped with at least a camera and a calculation unit as well as a slicer for cutting the fillets into fillet slices.

WO 02/07937 discloses a system wherein work pieces, which may be meat, are scanned, and based on the scanning results the most appropriate cut-up of the item is determined and performed, according to predefined parameters. The scanning may include a camera or other vision system. The cutting is preferably performed by water jets, and the portioned pieces are after treatment sorted into various bins according to weight, by a sorting system removing them from a conveyor belt, arranged through the entire system.

US Patent No. 4,557,019 discloses a system for cutting fillets into fillet slices, wherein the fillet slices are analyzed with a camera, and a calculation unit, which records beams of light, sends these to the fillet portions which are present on a conveyor belt, thereby generating data for calculating a measure for the dimensions of the fillets, said camera recording the position of beams both when a fillet is present on the conveyor belt and when no fillet is present on the conveyor belt.

The measurement result is fed to a calculation unit which, on the basis of this, controls a slicer which is adjusted to cut the fillet into predetermined portion sizes.

In the known system, all portions will originate from the same fillet, which is not always expedient if the portions are packaged in transparent packages which allow the consumers to inspect the uppermost fillet in the package,

Since, moreover, a desired portion quantity must always contain a certain minimum amount, but not more, it is desirable that the portion amount is close to a desired value, since everything above the minimum amount is a loss for the producer, also called "give away".

Accordingly, an object of the invention is to provide a method, wherein cutting and packaging of fillet slices may be performed such that the fillet slices are sorted in packages in which give away is minimized.

The object of the invention is achieved by a method of the type defined in the introductory portion of claim 1, which is characterized in that a weight determination of the fillet slices is performed, and, on the basis of the weight determination, the fillet slices are conveyed along the conveyor belt, where they are moved to and transferred to a selected package tray of a plurality of package trays disposed opposite the conveyor belt, each package tray being placed on its own conveyor table, following which the selected transport tray with fillet slice on the transport table is weighed, and the result is applied to the calculation unit.

Hereby, when an actual fish slice has a weight causing one or more of the package trays, if they receive the actual fish fillet, to have a weight which is within a tolerance range of values of give away, it is possible to select the package tray which gives the smallest value of give away.

It is expedient if, as stated in claim 2, the transport trays are weighed each time a fillet slice is supplied to it, it being then constantly known which package trays are about to be ready to receive the last fillet slice.

If, as stated in claim 3, the weight determination of the fillet slices is determined as an estimate on the basis of the camera imaging of these, a quick weight determination is achieved, and thereby a quick filling of the package trays.

If a very accurate weight determination is desired, which may be the case with costly fillets, it is advantageous if, as stated in claim 4, the weight determination of the fillet slices is determined in that the entire fillet is weighed before it is cut in the slicer, and that the remaining part of the fillet is weighed after a fillet slice has been cut, following which the weight of the fillet slice is determined as a difference between the weighings of the fillet before it is cut and after it has been cut.

As an indication of the quality determination of the cut fillet slices it is an advantage if, as stated in claim 5, the camera performs a colour analysis and a geometrical determination of the circumference of the fillet slice.

With a view to providing a package tray which is as attractive and appealing as possible to a consumer, without a concurrent too great give away value, it is an advantage if, as stated in claim 6, fillet slices having an attractive colour and geometry are placed on a package tray having a weight which means that the attractive fillet is placed as the last one a package tray, said weight of the package tray after the placing of the attractive fillet being close to, but as little as possible above a desired minimum value.

To control the package handling additionally, it is an advantage if, as stated in claim 7, the camera is additionally used for estimating other characteristic parameters, such as area or shape, and if, as stated in claim 8, the cutting of a fillet slice in the slicer from the same fillet is controlled on the basis of imaged and calculated characteristic parameters of the preceding fillet slice.

As mentioned, the invention also relates to a system.

This system is characteristic in that transport tables with package trays are arranged along the conveyor belt, and that each transport table is provided with a weighing cell according to claim 9.

Expedient embodiments of the system are defined in claims 10 and 11.

The invention will now be explained more fully with reference to the drawing, in which

fig. 1    shows a three-dimensional view of a system, seen obliquely from the front, for cutting a fish fillet, such as half a salmon side, into fillet slices, said fillet slices being imaged by a camera and automatically distributed on package trays, while

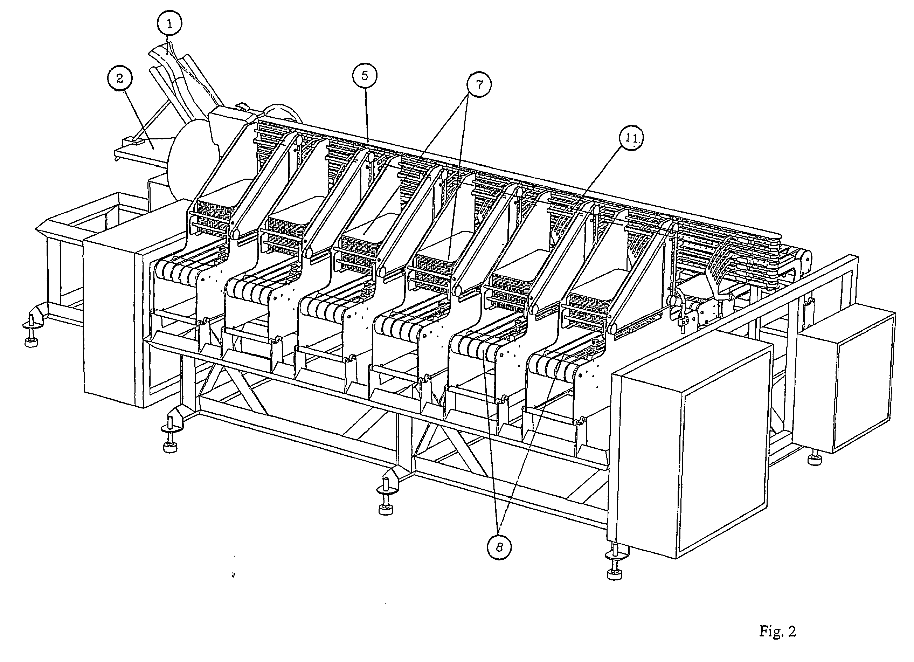

fig. 2    shows the system of fig. I, but seen obliquely from behind.

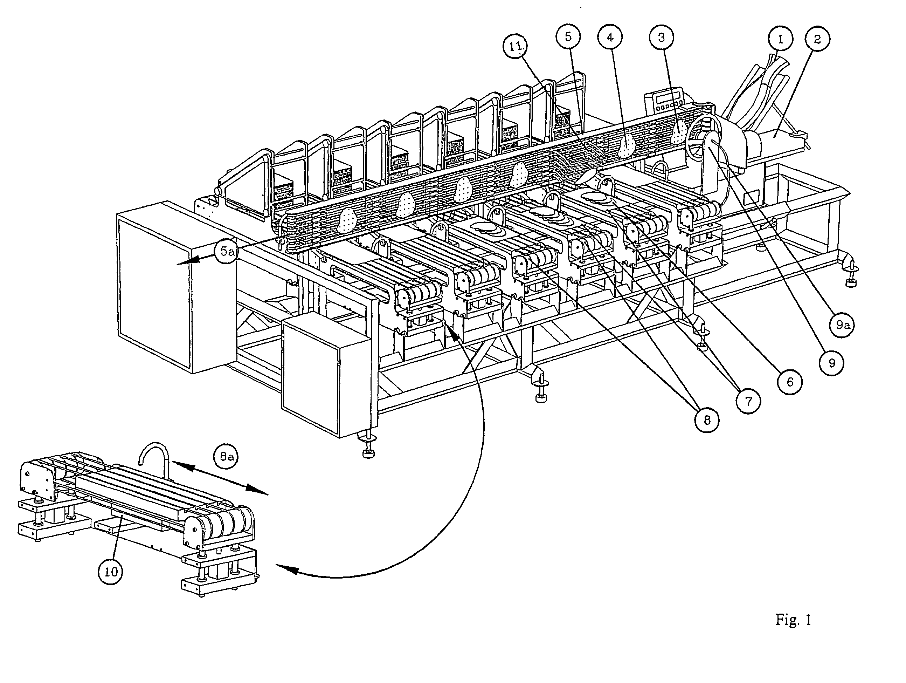

In fig. 1, the numeral 1 indicates a fish fillet, such as e.g. half a salmon side which is to be cut into fillet slices. The fish fillet is cut in a so-called slicer 2, where the thickness of the slices into which the fish is to be cut may be adjusted. In the example shown, the fillet is from a fish, but, as will be known, cutting of fillets for food products takes place from many other objects than fish, e.g. cattle and poultry, and the invention comprises all forms of objects to be filleted.

The cut fillet slices are fed from the slicer 2 via a conveyor belt 5 which is vertically suspended away from the slicer. The fillet slices 3 and 4, which are conveyed from the slicer 2 via the conveyor belt 5, may be fixed to the conveyor belt in spikes which are mounted on the conveyor belt.

The conveyor belt 5 moves the fillet slices 3 and 4 past a number of identical transport tables 8 which are spaced equidistantly in parallel in the example shown and have horizontally arranged thereon package trays 7 on which the fillet slices 6 transported by the conveyor belt 5 may be placed.

Weighing cells 10 capable of weighing the weight of a package tray 7 with received fillet slices 6 is positioned below the transport tables 8.

When a fillet slice is to be transferred from the conveyor belt 5 to a package 5 tray 7, this typically takes place by ejector means 1 I which release the fillet slice from the spikes in the conveyor belt and place the fillet slice on the package tray 7 in a specific position determined by the position of the package tray on the associated transport table 8.

The conveyor belt 5 moves away from the slicer 2 in the direction shown at 5A.

The fillet slice 3, which has just left the slicer 2, is imaged by a camera 9; from which the signals 9A are fed to a calculation unit which is capable of interpreting the images from the camera.

The calculation unit will advantageously be capable of interacting with the rest of the processing equipment, including the slicer 2, the conveyor belt 5, the transport tables 8, the package trays 7 and the weighing transducers 10. Thus, the calculation unit can control the entire processing sequence, including the cutting of fillets, transport of fillet slices 3 and 4 on the conveyor belt 5, release of fillet slices from the conveyor belt 5 and placing of the package trays 7 on the transport tables 8. The transport tables may be guided in the movement shown at 8A, whereby a package tray 7 placed on the transport table 8 may be guided and moved. The weight of placed fillet slices may be controlled via the weighing cells 10.

Thus, on the basis of the camera images of the individual fillet slices, the calculation unit may determine on which package tray a given fillet slice is to be placed, and where on the selected package tray a given fillet slice is to be placed.

When food products, such as e.g. salmon, are sold as fillet slices placed on package trays, the product is frequently enclosed by a plastics film, which is wholly or partly transparent, thereby allowing the consumer to inspect the article prior to purchase. Thus, it is important that the fillet slices which the potential buyer can see through the transparent package film, are as attractive and appealing as possible to thereby promote the buying process.

When using the invention, the calculation unit can select the most attractive fillet slices on the basis of the camera images of the individual fillet slices and place them exactly where the consumer can see the fillet slices in a given package.

The less attractive fillet slices, which are perhaps smaller in terms of area, discoloured, or differ in another way from the ideal picture of a fillet slice, may be placed via a corresponding process such that they are covered by visually more attractive fillet slices.

The packaged fillet slice products are frequently sold by weight, e.g. such that the product is guaranteed to have a certain minimum weight. If the minimum weight is stated to be e.g. 200 grams, the product must contain 200 grams of course, but anything beyond the promised weight is in practice a gift to the costumer, often called give away, which it is important to minimize for the producer.

When a camera images a fillet slice, it is simple to calculate the area of the fillet slice on the basis of an analysis of the image. If the density of the fillet slice is known, which is normally the case, and the thickness of the fillet slice is also known, the weight of a fillet slice may be calculated on the basis of the data of the camera image according to the formula:

$$W = A * T * D$$

Where:

W = weight

A = area

T = Thickness

D = density

This ensures that the weight of each fillet slice may be calculated immediately after the image of the fillet slice 3 has been taken, when this is placed on the conveyor belt 5 immediately after the cutting in the slicer 2.

When the weight of a fillet slice is known, the fillet slice may be placed on precisely the package tray 7 where the weight is most appropriate with a view to achieving an overall final weight of each packaged product which is as close to the guaranteed weight as possible, so as to reduce the give away part to a minimum.

This, of course, requires that the calculation unit controlling the entire process remembers what previously placed fillet slices weighed, and on which package tray these are placed.

When the process is automated such that the calculation unit controls the individual sub-components, give away may also be reduced by optimizing the final weight of a package by weight adaptation of e.g., the last fillet slice or slices, as the weight of these may be adjusted by adjusting the fillet slice thickness. This may be done simply by applying the assumption that two successive fillet slices cut from the same object will have approximately the same area, whereby the weight of fillet slice no. n+1 following fillet slice no. n may be described by the following formula:

$$W(n+1) = W(n) * T(n+1)/T(n)$$

Where:

W(n+1): the desired weight of the next fillet slice from the slicer
W(n): the weight of the last fillet slice which has left the slicer
T(n+1): the thickness of the next fillet slice which is to be cut
T(n): the thickness of the fillet slice which has just left the slicer.

Of course, uncertainty is associated with the weight determination of a fillet slice when this is calculated on the basis of an image, as described above by the stated formula. The uncertainty results inter alia from a variation in density and variation in fillet slice thickness over the entire fillet slice surface.

In addition to adjustment of the fillet slice thickness, the weight and also the shape of a fillet slice may be changed by adjusting the angle between the fillet to be cut and the medium, such as a knife, water jet or laser light, which cuts the fillet into fillet slices.

The estimated weights, which are calculated on the basis of image data of the fillet slices, are controlled by weighing the fillet slices, e.g. after they have been placed on the package trays, by the weighing cells 10.

Instead of using estimated weights, a whole fillet is weighed according to the invention by a weighing cell which is placed below the slicer, and when the slicer has cut a fillet slice, the remaining part of the fillet is weighed, following which an exact determination of the weight of the fillet slice is determined as the difference between the weights measured before the slicer has cut a fillet slice and after the slicer has cut the fillet slice.

Although the invention has been explained in connection with a method and a system for processing, such as cutting, sorting and packaging of fillets, such as salmon fillets, nothing prevents the principles of the invention from being applied in other connections within the scope defined by the claims.

**Claims**

1. A method of processing and packaging fillets, such as salmon fillets, wherein the fillets are fed on to a conveyor belt (5) provided with a slicer (2) for cutting the fillets into fillet slices (3,4), and wherein at least a camera (9) and a calculation unit are arranged near the conveyor belt for imaging and calculating characteristic parameters of the fillet slices (3,4), **characterized in that** a weight determination of the fillet slices is performed, and, on the basis of the weight determination, the fillet slices (3,4) are conveyed along the conveyor belt (5) where they are moved to and transferred to a selected package tray (7) of a plurality of package trays disposed opposite the conveyor belt (5), each package tray (7) being placed on its own transport table, following which the selected transport tray with fillet slice on the transport table (8) is weighed, and the result is applied to the calculation unit.

2. A method according to claim 1, **characterized in that** the package trays (7) are weighed each time a fillet slice (3,4) is supplied to it.

3. A method according to claim 1 or 2, **characterized in that** the weight determination of the fillet slices (3,4) is determined as an estimate on the basis of the camera imaging of these.

4. A method according to claim 1 or 2, **characterized in that** the weight determination of the fillet slices (3,4) is determined **in that** the entire fillet is weighed before it is cut in the slicer (2), and that the remaining part of the fillet is weighed after a fillet slice has been cut, following which the weight of the fillet slice is determined as a difference of the weighings of the fillet before it is cut and after it has been cut.

5. A method according to claims 1 - 5, **characterized in that** the camera (9) performs a colour analysis and a geometrical determination of the circumference of the fillet slice.

**6.** A method according to claim 5, **characterized in that** fillet slices (3,4) having an attractive colour and geometry are placed on a package tray (7) having a weight which means that the attractive fillet is placed as the last one on a package tray, said weight of the package tray after the placing of the attractive fillet being close to, but as little as possible above a desired minimum weight.

**7.** A method according to claims I - 6, **characterized in that** the camera (9) is additionally used for estimating other characteristic parameters, such as area or shape.

**8.** A method according to claims 1 - 7, **characterized in that** the cutting of a fillet slice in the slicer (2) from the same fillet is controlled on the basis of imaged and calculated characteristic parameters of a preceding fillet slice.

**9.** A system for processing fillets, such as salmon fillets, which are fed on to a conveyor belt (5) equipped with at least a camera (9) and a calculation unit as well as a slicer (2) for cutting the fillets into fillet slices, wherein transport tables (8) with package trays (7) are arranged along the conveyor belt (5), and each transport table (8) is provided with a weighing cell (10) **characterized in that** a further weighing cell (10) is arranged below the slicer (2) to weigh the fillets before each cutting process.

**10.** A system according to claim 9, **characterized in that** the conveyor belt (5) is provided with spikes and a vertically extending surface.

**11.** A system according to claims 9 - 10, **characterized in that** the transport tables (8) have horizontal surfaces, and that they are disposed opposite the conveyor belt (5) in positions where ejector means are arranged on the conveyor belt.

**Patentansprüche**

**1.** Verfahren zum Verarbeiten und Verpacken von Filets wie zum Beispiel Lachsfilets, wobei die Filets auf ein Förderband (5) gebracht werden, welches eine Schneidevorrichtung (2) zum Schneiden der Filets in Filetscheiben (3, 4) aufweist, und wobei wenigstens eine Kamera (9) und eine Berechnungseinheit zum bildlichen Erfassen und Berechnen charakteristischer Parameter der Filetscheiben (3, 4) in der Nähe des Förderbandes angeordnet sind, **dadurch gekennzeichnet, dass** eine Gewichtsbestimmung der Filetscheiben durchgeführt wird und auf der Basis der Gewichtsbestimmung die Filetscheiben (3, 4) entlang des Förderbandes (5) befördert werden, wo sie zu einer ausgewählten Verpackungsschale (7) aus einer Mehrzahl von Verpackungsschalen, welche gegenüber dem Förderband (5) angeordnet sind, bewegt und in sie übergeben werden, wobei jede Verpackungsschale (7) auf ihren eigenen Transporttisch platziert wird, woraufhin die ausgewählte, auf dem Transporttisch (8) angeordnete Transportschale mit Filetscheibe/n gewogen wird und das Ergebnis der Berechnungseinheit zugeführt wird.

**2.** Verfahren gemäß Anspruch 1, **dadurch gekennzeichnet, dass** die Verpackungsschalen (7) jedes Mal gewogen werden, wenn ihnen eine Filetscheibe (3, 4) zugeführt wird.

**3.** Verfahren gemäß Anspruch 1 oder 2, **dadurch gekennzeichet, dass** die Gewichtsbestimmung der Filetscheiben (3, 4) als Schätzung auf der Basis der Kamera-Abbildung derselben erfolgt.

**4.** Verfahren gemäß Anspruch 1 oder 2, **dadurch gekennzeichnet, dass** die Gewichtsbestimmung der Filetscheiben (3, 4) in der Weise erfolgt, dass das gesamte Filet gewogen wird, bevor es in der Schneidevorrichtung (2) geschnitten wird, und dass der übrige Teil des Filets gewogen wird, nachdem eine Filetscheibe abgeschnitten worden ist, woraufhin das Gewicht der Filetscheibe als eine Differenz der Wiegungen des Filets, bevor es geschnitten wird und nachdem es geschnitten worden ist, bestimmt wird.

**5.** Verfahren gemäß den Ansprüchen 1 - 5, **dadurch gekennzeichnet, dass** die Kamera (9) eine Farbanalyse und eine geometrische Bestimmung des Umfangs der Filetscheibe durchführt.

**6.** Verfahren gemäß Anspruch 5, **dadurch gekennzeichnet, dass** Filetscheiben (3, 4), welche eine attraktive Farbe und Geometrie aufweisen, auf einer Verpackungsschale (7) platziert werden, welche ein Gewicht aufweist, welches bedeutet, dass das attraktive Filet als letztes auf einer Verpackungsschale platziert wird, wobei das Gewicht der Verpackungsschale nach dem Platzieren des attraktiven Filets in der Nähe eines gewünschten Mindestgewichtes, jedoch so wenig wie möglich darüber liegt.

**7.** Verfahren gemäß den Ansprüchen 1 - 6, **dadurch gekennzeichnet, dass** die Kamera (9) zusätzlich zum Schätzen anderer charakteristischer Parameter wie zum Beispiel Fläche oder Form verwendet wird.

**8.** Verfahren gemäß den Ansprüchen 1 - 7, **dadurch gekennzeichnet, dass** das in der Schneidevorrichtung (2) erfolgende Abschneiden einer Filetscheibe von demselben Filet auf der Basis von abgebildeten und berechneten charakteristischen Parametern einer vorangegangenen Filetscheibe gesteuert wird.

**9.** Ein System zum Verarbeiten von Filets wie zum Beispiel Lachsfilets, welche auf ein Förderband (5) gebracht werden, welches mit wenigstens einer Kamera (9) und einer Berechnungseinheit sowie einer Schneidevorrichtung (2) zum Schneiden der Filets in Filetscheiben ausgestattet ist, wobei Transporttische (8) mit Verpackungsschalen (7) entlang des Förderbandes (5) angeordnet sind und jeder Transporttisch (8) eine Wiegezelle (10) aufweist, **dadurch gekennzeichnet, dass** eine weitere Wiegezelle (10) unterhalb der Schneidevorrichtung (2) angeordnet ist, um die Filets vor jedem Schneidevorgang zu wiegen.

**10.** System gemäß Anspruch 9, **dadurch gekennzeichnet, dass** das Förderband (5) Dorne und eine vertikal verlaufende Oberfläche aufweist.

**11.** System gemäß den Ansprüchen 9 - 10, **dadurch gekennzeichnet, dass** die Transporttische (8) horizontale Oberflächen aufweisen und dass sie gegenüber dem Förderband (5) an Positionen angeordnet sind, wo Ausgabemittel auf dem Förderband angeordnet sind.

**Revendications**

**1.** Procédé pour traiter et conditionner des filets, tels que des filets de saumon, dans lequel les filets sont acheminés sur une bande transporteuse (5) dotée d'une trancheuse (2) pour couper les filets en tranches de filet (3, 4) et dans lequel au moins une caméra (9) et une unité de calcul sont agencées près de la bande transporteuse pour visualiser et calculer les paramètres caractéristiques des tranches de filet (3, 4), **caractérisé en ce qu'**on effectue une détermination du poids des tranches de filet et, en se basant sur la détermination du poids, les tranches de filet (3, 4) sont acheminées le long de la bande transporteuse (5) où elles sont transportées et transférées jusqu'à un plateau de conditionnement (7) choisi faisant partie d'une pluralité de plateaux de conditionnement disposés à l'opposé de la bande transporteuse (5), chaque plateau de conditionnement (7) étant placé sur sa propre table de transport, après quoi on pèse le plateau de transport choisi avec la tranche de filet sur la table de transport (8) et le résultat est appliqué à l'unité de calcul.

**2.** Procédé selon la revendication 1, **caractérisé en ce que** les plateaux de conditionnement (7) sont pesés chaque fois que l'on y dépose une tranche de filet (3, 4).

**3.** Procédé selon la revendication 1 ou 2, **caractérisé en ce que** la détermination du poids des tranches de filet (3, 4) est déterminée par estimation en se basant sur la visualisation de celles-ci avec la caméra.

**4.** Procédé selon la revendication 1 ou 2, **caractérisé en ce que** la détermination du poids des tranches de filet (3, 4) est déterminée **en ce qu'**on pèse le filet entier avant qu'il soit coupé dans la trancheuse (2) et **en ce que** la partie restante du filet est pesée après avoir coupé une tranche de filet, après quoi on détermine le poids de la tranche de filet en tant que différence des pesées du filet avant qu'il soit coupé et après qu'il a été coupé.

**5.** Procédé selon les revendications 1 à 5, **caractérisé en ce que** la caméra (9) effectue une analyse de couleurs et une détermination géométrique de la circonférence de la tranche de filet.

**6.** Procédé selon la revendication 5, **caractérisé en ce que** les tranches de filet (3, 4) ayant une couleur et une géométrie attrayantes sont placées sur un plateau de conditionnement (7) ayant un poids qui signifie que le filet attrayant est placé en dernier sur un plateau de conditionnement, ledit poids du plateau de conditionnement, après placement du filet attrayant, approchant, mais dépassant le plus faiblement possible, un poids minimal souhaité.

**7.** Procédé selon les revendications 1 à 6, **caractérisé en ce que** la caméra (9) est de plus utilisée pour estimer d'autres paramètres caractéristiques tels que la surface ou la forme.

**8.** Procédé selon les revendications 1 à 7, **caractérisé en ce que** la coupe d'une tranche de filet dans la trancheuse (2) à partir du même filet est contrôlée en se basant sur les paramètres caractéristiques visualisés et calculés d'une tranche de filet précédente.

**9.** Système pour traiter des filets tels que des filets de saumon qui sont acheminés sur une bande transporteuse (5) équipée d'au moins une caméra (9) et d'une unité de calcul ainsi que d'une trancheuse (2) pour couper les filets en tranches de filet, dans lequel des tables de transport (8) avec des plateaux de conditionnement (7) sont agencées le long de la bande transporteuse (5) et chaque table de transport (8) est dotée d'une cellule de pesage (10), **caractérisé en ce qu'**une autre cellule de pesage (10) est agencée en dessous de la trancheuse (2) pour peser les filets avant chaque processus de coupe.

**10.** Système selon la revendication 9, **caractérisé en ce que** la bande transporteuse (5) est dotée de pointes et d'une surface s'étendant verticalement.

**11.** Système selon les revendications 9 à 10, **caractérisé en ce que** les tables de transport (8) ont des surfaces horizontales et **en ce qu'**elles sont disposées à l'opposé de la bande transporteuse (5) dans des positions où des moyens d'éjection sont agencés sur la bande transporteuse.

Fig. 1

Fig. 2